# EUROPEAN PATENT SPECIFICATION

(11) **EP 0 740 688 B1**
(45) Date of publication and mention of the grant of the patent: **28.08.2002**
(21) Application number: 94931753.1
(22) Date of filing: 28.09.1994
(51) Int. Cl.: C08L 77/00, C08L 77/06

(54) **BLOWMOLDABLE NYLON COMPOSITIONS**
BLASFORMBARE NYLON ZUSAMMENSETZUNGEN
COMPOSITIONS DE NYLON APTES A L'EXTRUSION-SOUFFLAGE

(30) Priority: 21.01.1994 EP 94200155
(43) Date of publication of application: 06.11.1996
(73) Proprietor: E.I. DU PONT DE NEMOURS & COMPANY INCORPORATED, Wilmington, Delaware 19898 (US)
(72) Inventor: WISSMANN, Rolf, Bernhard, CH-1222 Vesenaz (CH)
(74) Representative: Jones, Alan John
(86) International application number: US9410586
(87) International publication number: WO95020011

(56) References cited:
- GB-A- 2 179 358
- US-A- 4 167 505
- US-A- 5 122 571
- US-A- 5 352 500

## Description

### BACKGROUND OF THE INVENTION

### Field of Invention

This invention relates to nylon compositions and shaped articles made therefrom and more particularly to blowmoldable nylon compositions.

### Background Discussion

Nylons (polyamides) are used extensively to make shaped articles that require good solvent resistance and good properties at elevated temperatures. They are ordinarily processed by injection molding, but there are many components of automobiles and other systems wherein such parts are hollow and to manufacture these by injection molding is very difficult and expensive. Many such parts can conceivably be made by blowmolding techniques provided the polymer system has adequate melt strength and viscosity. Unfortunately, polyamides commonly used for injection molding have number average molecular weights generally between 10,000 and 25,000 which is too low to make them suitable for extrusion blowmolding. It would be desirable to have a blowmoldable polyamide composition made from the usual injection moldable polyamides.

In addition for many applications, polyamide compositions with improved toughness are required. The prior art describes various techniques of modifying polyamides with tougheners. Such tougheners include low modulus ethylene copolymers containing small amounts of carboxyl or anhydride functionality. Other tougheners include ethylene acid copolymers neutralized with metal cations (see Epstein U.S. Patent No. 4,174,358 or Murch U.S. Patent No. 3,845,163). Combinations of polyamides with such tougheners afford unique combinations that are tough and suitable for injection molding and extrusions. These combinations, however, possess lower than optimum viscosities and melt strength for use in blowmolding.

In U.S. Patent 5,122,570 to Subramanian, the melt viscosities of such combinations of polyamides and the aforementioned toughening polymers are increased substantially by addition of small amounts of an anhydride rich polymer which acts as a coupling or crosslinking agent to react preferentially with the polyamide to increase molecular weight. At the same time, such anhydride-rich polymers react with the acid groups in the toughening polymer as well, increasing its viscosity. While melt strength is improved with such compositions and good blowmolded products are obtained, a goal remains to obtain compositions with good melt strength with a minimum amount of additives and which have the least effect on physical properties, such as tensile strength, stiffness and heat distortion temperature.

US-5,122,571 (Westeppe *et al.*) discloses thermoplastic moulding compounds of polyamides and graft polymers containing tert-butylacrylate. The moulding compound may also optionally comprise rubber polymers as impact strength modifiers.

GB-2179358 (BIP Chemicals Ltd) discloses thermoplastic polyamide compositions containing not less than 65% nylon 6, 2-25% multi-phase acrylic polymer and 3-33% of a second elastomeric component. The second elastomeric component having a glass transition temperature below 0°C and being a methacrylated butadiene-styrene copolymer or an all-acrylic elastomer.

US-4,421,892 (Kasahara *et al.*) discloses a thermoplastic polymeric material containing 90 to 35% by weight polyamide and 10 to 65% by weight styrene copolymer containing unsaturated carboxylic acid anhydride. Good mechanical strength was achieved in such polyblends when an unsaturated carboxylic acid ester was additionally present in the styrene copolymer. The polymeric materials are suitable for extrusion moulding and blow moulding.

### SUMMARY OF THE INVENTION

According to the present invention, there is provided a blowmoldable polyamide composition comprising:
(a) at least 75% by weight of a semicrystalline polyamide having a relative viscosity as measured in 90% formic acid at 23°C in the range of 50-100;
(b) 0.5-5% by weight of a copolymer of styrene and maleic anhydride which contains at least 15% by weight of anhydride units;
(c) 5-20% by weight of an acrylic-modified elastomeric polymer in which the elastomeric portion comprises at least 50% by weight of at least one C₁ to C₁₅ alkyl acrylate, 0-5% by weight of at least one graftlinking monomer, 0-5% by weight of a cross-linking monomer, and the balance to 100% by weight of at least one other polymerizable ethylenically unsaturated monomer; and
(d) 0-2% by weight of a heat-stabilizer,
wherein the above weight percents are based upon the total weight of components (a), (b), (c) and (d) only.
Also provided are filled compositions and shaped articles made from both the unfilled and filled compositions.

### DETAILED DESCRIPTION OF THE INVENTION

The polyamide matrix resin of the compositions of this invention is well known in the art and embraces those semi-crystalline resins having a relative viscosity (RV) in the range of 50-100, as measured in 90% formic acid at 23°C, preferably in the range of 80-100. Polyamides with RVs lower than 80 can be used, but in such cases larger amounts of modifiers are needed for obtaining similar melt strengths. Such resins are commonly referred to as nylons. Suitable polyamides include those described in US Patent Nos. 2,071,250; 2,071,251; 2,130,523; 2,130,948; 2,241322; 2,312,966; 2,512,606 and 3,393,210. The polyamide resin can be produced by condensation of equimolar amounts of a saturated dicarboxylic acid containing from 4 to 12 carbon atoms with a diamine, in which the diaine contains from 4 to 14 carbon atoms. Excess diamine can be employed to provide an excess of amine end groups over carboxyl end groups in the polyamide. Examples of polyamides include polyhexamethylene adipamide (66 nylon), polyhexamethylene azelaamide (69 nylon), polyhexamethylene sebacamide (610 nylon), and polyhexamethylene dodecanoamide (612 nylon): the polyamide produced by ring opening of lactams, *i.e.,* polycaprolactam (6 nylon), polylauric lactam; poly-11-aminoundecanoic acid, and bis(paraaminocyclohexyl) methane dodecanoamide. It is also possible to use in this invention polyamides prepared by the copolymerization of two of the above polymers or terpolymerization of the above polymers or their components; *e.g.*, an adipic, isophthalic acid, hexamethylene diamine copolymer; or, by using physical blends of two or more of the above nylon polymers, *e.g.*, PA6.6 and PA6. Preferably the polyamides are linear with a melting point in excess of 200°C. By "semicrystalline" is meant that the polyamide has a distinct melting point with a measurable heat of fusion, as described in U.S. Patent No. 4,410,661 in Columns 1 and 2. Nylon 6 and nylon 66 are preferred. The preferred RV for nylon 6 is 80-90 and for nylon 66 is 90-100.

The second component of the compositions of the invention is 0.5-5% by weight (preferably 1-3%) of a copolymer of styrene and maleic anhydride in which the maleic anhydride content is greater than 15% by weight, preferably in the range of 15 to 20% by weight. Such copolymers are commercially available under the name of DYLARK™ FG3000 and FG4000 sold by Arco Chemical.

The third component of the compositions of the invention is 5-20% by weight (preferably 5-12%) of an acrylic-modified elastomeric polymer. Useful acrylic-modified elastomeric-based polymers and their preparation are described in U.S. Patent 4,167,505 to Dunkelberger, the disclosure of which is incorporated by reference. Such polymers are available commercially under the name PARALOID™ sold by Rohm and Haas, such as PARALOID™ EXL3387 and EXL3386.

The acrylic-elastomer polymers have an elastomeric portion which is polymerized from a monomer mixture containing at least 50% by weight of at least one C₁ to C₁₅ alkyl acrylate, 0-5% by weight of at least one graftlinking monomer, 0-5% by weight of a crosslinking monomer, and the balance to 100% by weight of at least one other polymerizable ethylenically unsaturated monomer. Suitable graftlinking monomers and crosslinking monomers are described in column 3, lines 34-48 of U.S. Patent 4,167,505.

Preferred polymers are an elastomeric-based acrylic core shell polymer having:
(1) 70-80 parts by weight of a first acrylic elastomeric stage comprising a polymer polymerized from a monomer mixture comprising 79-99.5 parts n-butyl acrylate, 0-10 parts of at least one polymerizable monoethylenically or conjugated diethylenically unsaturated monomer, 0.1-5 parts 1,4-butylene glycol diacrylate and 0.1-5 parts diallyl maleate; and
(2) 20-30 parts by weight hard shell final stage polymer polymerized in the presence of said first elastomeric stage from a monomer mixture comprising about 80-100 parts by weight methyl methacrylate, 0-20 parts of another monoethylenically unsaturated monomer and 0-5 parts monoethylenically unsaturated carboxylic acid.

An optional third component is a heat-stabilizer which, when used, is contained in the oomposition up to a level of 2% by weight, preferably up to 1.5% by weight. Any commercially available heat-stabilizer can be used and includes both organic and inorganic stabilizers. Whether a heat-stabilizer is used or not depends in great part on the end-use of the compositions. Typically, blow molded parts for under-the-hood automotive uses will contain a heat stabilizer.

In addition to its polymer components, the composition of this invention can include reinforcing and non-reinforcing fillers, antioxidants, stabilizers, lubricants (*e.g*., stearates and oleamide), antiblocking agents, antistatic agents, waxes, coupling agents for fillers, pigments, fire retardants, titanium dioxide, talc and other processing aids known in the polymer compounding art. These pigments and other additives comprise 0 to about 50 weight percent of the total filled composition. When a filler is used, it comprises preferably 5 to 30 weight percent of the total composition.

The compositions of the invention can be prepared by mixing the polymeric ingredients and optional additives by use of conventional masticating equipment, for example, a rubber mill, Brabender Mixer, Banbury Mixer, Buss-ko kneader, Farrel continuous mixer, or twin screw continuous mixer. Mixing times should be sufficient to obtain homogeneous blends. Satisfactory mixing times depend upon the types of polymers and upon the type and amount of compatibilizer. Typically, mixing times of about 5 minutes are satisfactory. If the polymer blend is obviously nonhomogeneous, additional mixing is required.

The invention can be further understood by the examples that follow, in which parts and percentages are by weight and temperatures are in degrees Celsius.

### EXAMPLES

The examples set forth below were carried out using the following polymeric components:
1) Polyamide 6 (PA6) having a RV of 84 and 89;
2) Styrene-maleic anhydride copolymer (SMA) containing 15% maleic anhydride (DYLARK™ FG3000);
3) Acrylic-modified elastomeric polymer (PARALOID™ EXL3387); and
4) Ionomeric polyolefin (Ionomer) as a control was a 70% zinc neutralized ethylene-methacrylic acid (90/10), mp 73°C.

The polymers with optional additives were extrusion blended using a 25 mm Berstorff twin screw extruder and the polymer strands cut into pellets, dried and used to blow mold one-quart containers using a Battenfeld/Fischer extrusion blow molding machine.

### Blow Molding Parison Sag Test

For blowmolding large and heavy articles, it is important that the extruded parison have a high strength in order to avoid excessive sagging of the parison during its extrusion, before the blow molding tool closes, to form the blow molded part. In an ideal situation, the sagging of an extruded parison should be linear and not faster than the extrusion rate. For constant blow molding conditions, such as extruder barrel temperature settings, screw speed, die and pin geometry, the parison sag behavior depends mainly on the melt strength of the blow molding resin. The higher the melt strength of a blow molding resin, the slower the extruded parison sags during its extrusion. For assessing the melt strength of a blow molding resin, one can either measure melt viscosity at low shear rates or one can determine melt strength with a Goettfert Rheotens Melt Tension Instrument. While both tests allow some differentiation of the blow moldability of blow molding resins, the ultimate test has to be the actual measurement of parison sag of a vertically extruded parison on a blow molding machine.

For the resins claimed in the present invention, parison sag tests were conducted with the following conditions:
Blow molding machine: Battenfeld-Fischer VK 1/4 with a continuous extrusion, single parison head.
Die diameter: 23.8 mm.
Parison program: maximum die opening, without parison thickness control.
Barrel Temperature settings: 225 / 225 / 225 / 230 / 230 /230 / 230 / 235°C
Screw RPM: 31

All resins were pre-dried prior to conducting the parison sag test. The parison sag test was carried out by measuring the parison sag times in seconds for the extruded parison to reach a total vertical parison length of 120cm, measured from the exit of the die, in 10cm increments. The longer it takes for an extruded parison to reach a certain parison length and the more uniform the parison time intervals are for equal parison length intervals, the higher the melt strength is.

The compositions and parison sag test results are shown in Table 1. Both control resins 1 and 2 contained 18 wt% of ionomer and 1.5 wt% of SMA polymer DYLARK™ FG3000, whereas both example resins 1 and 2 contain 9 wt% of an acrylic-modified elastomeric polymer PARALOID™ EXL3387 and 1.5 wt% and 1.0 wt%, respectively of SMA polymer DYLARK™ FG3000.

The composition and sag test results are shown in Table 1.

**Table 1**

| Composition (wt%) | Example No. | | | |
|---|---|---|---|---|
| | Control 1 | Ex. 1 | Control 2 | Ex. 2 |
| | | | | |
| PA6 #1 [RV 89] | 79.0 | --- | --- | 88.4 |
| PA6 #2 [RV 84] | --- | 88.0 | 78.9 | --- |
| SMA | 1.5 | 1.5 | 1.5 | 1.0 |
| Ionomer | 18.0 | --- | 18.0 | --- |
| Acrylic-Elastomer | --- | 9.0 | --- | 9.0 |
| Heat Stabilizer*) | 0.5 | 0.5 | 0.6 | 0.6 |
| Black Color Master Batch | 1.0 | 1.0 | 1.0 | 1.0 |

| | | | | |
|---|---|---|---|---|
| *) The heat stabilizer used in Control 2 and Ex. 2 was the same as used in Control 1 and Ex. 1, except the amount of lubricant used was about 3 times greater. | | | | |

### Sag Test

| | Control 1 | Ex. 1 | Control 2 | Ex. 2 |
|---|---|---|---|---|
| % H₂O | 0.02 | 0.02 | 0.06 | 0.06 |
| Parison Length (cm) | | | | Sag Times (sec) |
| 0 | 0 | 0 | 0 | 0 |
| 10 | 8 | 10 | 8 | 8 |
| 20 | 17 | 23 | 15 | 15 |
| 30 | 27 | 36 | 22 | 21 |
| 40 | 35 | 48 | 29 | 25 |
| 50 | 44 | 59 | 34 | 29 |
| 60 | 50 | 69 | 39 | 32 |
| 70 | 57 | 77 | 42 | 34 |
| 80 | 62 | 85 | 46 | 36 |
| 90 | 67 | 91 | 49 | 38 |
| 100 | 72 | 96 | 52 | 39 |
| 110 | 76 | 102 | 55 | 40 |
| 120 | 81 | 108 | 58 | 41 |

The parison sag times clearly show that example resin 1 yielded higher parison sag times than control resin 1, indicating that PARALOID™ EXL3387 is more effective at half the concentration than the Ionomer. Example resin 2 shoes slightly lower parison sag times than control resin 2, but considering that not only half the level of elastomer was used, but also only 1.0 wt% of DYLARK™ FG3000 was used in example resin 2, these parison sag times are very attractive. The relative difference in parison sag times between control resin 1 and 2 and example resin 1 and 2 is due to a higher amount of lubricant in the heat stabilizer, which lowered the melt strength in both control resin 2 and example resin 2 versus control resin 1 and example resin 1.

## Claims

1. A blowmoldable polyamide composition comprising
(a) at least 75% by weight of a semicrystalline polyamide having a relative viscosity, as measured in 90% formic acid at 23°C, in the range of 50-100;
(b) 0.5-5% by weight of a copolymer of styrene and maleic anhydride which contains at least 15% by weight of anhydride units;
(c) 5-20% by weight of an acrylic-modified elastomeric polymer in which the elastomeric portion comprises at least 50% by weight of at least one C₁ to C₁₅ alkyl acrylate, 0-5% by weight of at least one graftlinking monomer, 0-5% by weight of a cross-linking monomer, and the balance to 100% by weight of at least one other polymerizable ethylenically unsaturated monomer; and
(d) 0-2% by weight of a heat-stabilizer;
wherein the above-mentioned weight percentages are based upon the total weight of components (a), (b), (c), and (d) only.

2. The composition of Claim 1 wherein the polyamide is nylon 6 having a relative viscosity in the range of 80-90 or nylon 66 having a relative viscosity in the range of 90-100.

3. The composition of Claim 1 wherein the composition contains 1-3% by weight of the styrene-maleic anhydride copolymer.

4. The composition of Claim 2 wherein the composition contains 1-3% by weight of the styrene-maleic anhydride copolymer.

5. The composition of Claim 1 wherein the acrylic-modified elastomeric polymer comprises:
(1) 70-80 parts by weight of a first acrylic elastomeric stage comprising a polymer polymerized from a monomer mixture comprising 79-99.5 parts n-butyl acrylate, 0-10 parts of at least one polymerizable monoethylenically or conjugated diethylenically unsaturated monomer, 0.1-5 parts, 1,4-butylene glycol diacrylate and 0.1-5 parts diallyl maleate; and
(2) 20-30 parts by weight hard shell final stage polymer polymerized in the presence of said first elastomeric stage from a monomer mixture comprising 80-100 parts by weight methyl methacrylate, 0-20 parts of another monoethylenically unsaturated monomer and 0-5 parts monoethylenically unsaturated carboxylic acid.

6. The composition of Claim 1 which comprises:
(a) 85-94% by weight of the polyamide;
(b) 1-3% by weight of the styrene-maleic anhydride copolymer;
(c) 5-12% by weight of the acrylic-modified elastomeric polymer; and
(d) 0-1.5% by weight of the heat stabilizer;
wherein the above-mentioned weight percentages are based upon the total weight of components (a), (b), (c) and (d) only.

7. The composition of Claim 1 further comprised of additives.

8. A shaped article obtained from the composition of Claim 1.

9. A shaped article obtained from the composition of Claim 6.

## Patentansprüche

1. Blasformbare Polyamidzusammensetzung, umfassend
(a) mindestens 75 Gew.% eines semikristallinen Polyamids mit einer relativen Viskosität, wie gemessen in 90% Ameisensäure bei 23°C in dem Bereich von 50-100,
(b) 0,5-5 Gew.% eines Copolymeren von Styrol und Maleinsäureanhydrid, das mindestens 15 Gew.% von Anhydrideinheiten enthält,
(c) 5-20 Gew.% eines Acryl-modifizierten elastomeren Polymeren, in dem der elastomere Anteil mindestens 50 Gew.% von mindestens einem C₁ bis C₁₅ Alkylacrylat, 0-5 Gew.% von mindestens einem pfropfverbindenden Monomeren, 0-5 Gew.% eines vernetzenden Monomeren und den Rest zu 100 Gew.% mindestens eines anderen polymerisierbaren ethylenisch ungesättigten Monomeren umfaßt, und
(d) 0-2 Gew.% eines Hitzestabilisators,
wobei die zuvor-genannten Gewichtsprozentsätze auf dem Gesamtgewicht von nur Komponenten (a), (b), (c) und (d) beruhen.

2. Zusammensetzung nach Anspruch 1, wobei das Polyamid Nylon 6 mit einer relativen Viskosität in dem Bereich von 80-90 oder Nylon 66 mit einer relativen Viskosität in dem Bereich von 90-100 ist.

3. Zusammensetzung nach Anspruch 1, wobei die Zusammensetzung 1-3 Gew.% des Styrol-Maleinsäureanhydrid Copolymeren enthält.

4. Zusammensetzung nach Anspruch 2, wobei die Zusammensetzung 1-3 Gew.% des Styrol-Maleinsäureanhydrid Copolymeren enthält.

5. Zusammensetzung nach Anspruch 1, wobei das Acryl- modifizierte elastomere Polymer umfaßt:
(1) 70-80 Gewichtsteile einer ersten elastomeren Acrylstufe, umfassend ein Polymer, polymerisiert aus einer Monomermischung, umfassend 79-99,5 Teile n-Butylacrylat, 0-10 Teile mindestens eines polymerisierbaren monoethylenisch oder konjugierten diethylenisch ungesättigten Monomeren, 0,1-5 Teile 1,4-Butylenglycoldiacrylat und 0,1-5 Teile Diallylmaleat und
(2) 20-30 Gewichtsteile Hartummantelungsendstufenpolymer, polymerisiert in der Anwesenheit der ersten elastomeren Stufe aus einer Monomermischung, umfassend 80-100 Gewichtsteile Methylmethacrylat, 0-20 Teile eines anderen monoethylenisch ungesättigten Monomeren und 0-5 Teile monoethylenisch ungesättigte Carbonsäure.

6. Zusammensetzung nach Anspruch 1, die umfaßt:
(a) 85-94 Gew.% des Polyamids,
(b) 1-3 Gew.% des Styrol-Maleinsäureanhydrid Copolymeren,
(c) 5-12 Gew.% des Acryl-modifizierten elastomeren Polymeren und
(d) 0-1,5 Gew.% des Hitzestabilisators,
wobei die zuvor-genannten Gewichtsprozentsätze auf dem Gesamtgewicht von nur Komponenten (a), (b), (c) und (d) beruhen.

7. Zusammensetzung nach Anspruch 1, ferner enthaltend Additive.

8. Geformter Gegenstand, erhalten aus der Zusammensetzung nach Anspruch 1.

9. Geformter Gegenstand, erhalten aus der Zusammensetzung nach Anspruch 6.

## Revendications

1. Composition de polyamide apte à être moulée par soufflage comprenant:
(a) au moins 75% en poids d'un polyamide semi-cristallin présentant une viscosité relative, mesurée dans 90% d'acide formique à 23°C, dans l'intervalle de 50-100;
(b) 0,5-5% en poids d'un copolymère de styrène et d'anhydride maléique qui contient au moins 15% en poids d'unités d'anhydride;
(c) 5-20% en poids d'un polymère élastomère modifié par un acrylique dans lequel la portion élastomère comprend au moins 50% en poids d'au moins un acrylate d'alkyle C₁ à C₁₅, 0-5% en poids d'au moins un monomère de liaison par greffe, 0-5% en poids d'un monomère de réticulation et le reste jusqu'à 100% en poids d'au moins un autre monomère éthyléniquement insaturé polymérisable; et
(d) 0-2% en poids d'un stabilisant thermique;
dans laquelle les pourcentages en poids mentionnés ci-dessus sont basés sur le poids total des composants (a), (b), (c) et (d) uniquement.

2. Composition suivant la revendication 1, dans laquelle le polyamide est un nylon 6 présentant une viscosité relative dans l'intervalle de 80-90 ou un nylon 66 présentant une viscosité relative dans l'intervalle de 90-100.

3. Composition suivant la revendication 1, dans laquelle la composition contient 1-3% en poids du copolymère de styrène et d'anhydride maléique.

4. Composition suivant la revendication 2, dans laquelle la composition contient 1-3% en poids du copolymère de styrène et d'anhydride maléique.

5. Composition suivant la revendication 1, dans laquelle le polymère élastomère modifié par un acrylique comprend:
(1) 70-80 parties en poids d'une première phase élastomère acrylique comprenant un polymère polymérisé à partir d'un mélange de monomères comprenant 79-99,5 parties d'acrylate de n-butyle, 0-10 parties d'au moins un monomère polymérisable insaturé monoéthyléniquement ou diéthyléniquement conjugué, 0,1-5 parties de diacrylate de 1,4-butylèneglycol et 0,1-5 parties de maléate de diallyle; et
(2) 20-30 parties en poids d'un polymère de phase finale à enveloppe dure polymérisé en présence de ladite première phase élastomère à partir d'un mélange de monomères comprenant 80-100 parties en poids de méthacrylate de méthyle, 0-20 parties d'un autre monomère monoéthyléniquement insaturé et 0-5 parties d'un acide carboxylique monoéthyléniquement insaturé.

6. Composition suivant la revendication 1, qui comprend:
(a) 85-94% en poids du polyamide;
(b) 1-3% en poids du copolymère de styrène et d'anhydride maléique;
(c) 5-12% en poids du polymère élastomère modifié par un acrylique; et
(d) 0-1,5% en poids du stabilisant thermique;
dans laquelle les pourcentages en poids mentionnés ci-dessus sont basés sur le poids total des composants (a), (b), (c) et (d) uniquement.

7. Composition suivant la revendication 1, composée en outre d'additifs.

8. Article façonné obtenu à partir de la composition suivant la revendication 1.

9. Article façonné obtenu à partir de la composition suivant la revendication 6.
